# EUROPÄISCHE PATENTSCHRIFT

(11) **EP 0 412 547 B1**
(45) Veröffentlichungstag und Bekanntmachung des Hinweises auf die Patenterteilung: **12.05.1993**
(21) Anmeldenummer: 90115321.3
(22) Anmeldetag: 09.08.1990
(51) Int. Cl.: C03B 33/10, C03B 33/027

(54) **Verfahren und Vorrichtung zum Schneiden einer Glasscheibe**
Method and device for cutting a glass plate
Procédé et dispositif pour couper une feuille de verre

(30) Priorität: 11.08.1989 DE 3926675
(43) Veröffentlichungstag der Anmeldung: 13.02.1991
(73) Patentinhaber: FLACHGLAS AKTIENGESELLSCHAFT, 90762 Fürth (DE)
(72) Erfinder: Fest, Helmut, D-4236 Hamminkeln (DE); Vengels, Winfried, Dipl.-Ing., D-4285 Raesfeld (DE); Dorda, Günter, Dipl.-Ing., D-4230 Wesel (DE)
(74) Vertreter: Andrejewski, Walter

(56) Entgegenhaltungen:
- DE-B- 2 731 230
- FR-A- 384 318

## Beschreibung

Die Erfindung betrifft ein Verfahren zum Schneiden einer Glasscheibe, insbesondere einer Fensterglasscheibe, mit einem Schneidrad, welches mit Hilfe eines Schneidkopfes nach Maßgabe einer vorgegebenen Schneidlinie, die zumindest einen bogenförmigen Bereich aufweist, linear mit der Schneidkopfgeschwindigkeit bewegt wird und dabei um seine Achse rotiert. Die Erfindung betrifft fernerhin eine Vorrichtung für die Durchführung eines solchen Verfahrens. Es versteht sich, daß das Schneidrad beim Schneidvorgang auf die Oberfläche der zu schneidenden Glasscheibe aufgedrückt wird, wobei es mit seiner Schneidkante in die Glasscheibe eingedrückt wird. Es entsteht die Schneidspur, die den "Schnitt" definiert. Im Rahmen der Erfindung kommt es lediglich auf eine Relativbewegung zwischen dem Schneidkopf und der Glasscheibe an. Diese wird im Rahmen der Erfindung als Schneidkopfgeschwindigkeit bezeichnet, unabhängig davon, ob der Schneidkopf oder die Glasscheibe bewegt wird. Der Schneidvorgang ist ein definiertes Brechen und genügt besonderen physikalischen Gesetzen (vgl. DE-OS 28 35 297). Ein solcher Schneidvorgang ist nicht zu vergleichen mit spanabhebenden Trennvorgängen, die mit schnellrotierenden Sägen oder Trennscheiben, insbesondere in der Metallbearbeitung, aber auch bei Glasscheiben, üblich sind.

Im Rahmen der aus der Praxis bekannten Maßnahmen, von denen die Erfindung ausgeht, wird das Schneidrad von dem Schneidkopft geschleppt und gleichsam über Reibungskupplung wie ein Reibrad rotierend längs der Schneidlinie bewegt. Dabei kann unterschiedlicher Schlupf entstehen. Das beeinträchtigt die Schneidkopfgeschwindigkeit, anders ausgedrückt die Schnittgeschwindigkeit, und damit die Produktivität einer entsprechenden Vorrichtung. Insbesondere in bogenförmigen Bereichen der Schneidlinie müssen die Schneidkopfgeschwindigkeit erheblich reduziert und die Andrückkraft erhöht werden, wenn anders eine ausreichend saubere Schneidspur nicht entsteht und im Ergebnis ein unsauberer Schnitt erzeugt wird, der bei den nachfolgenden Bearbeitungsstufen zu Problemen führt. Diese Probleme sind um so ausgeprägter, je kleiner der Krümmungsradius des bogenförmigen Bereichs der Schneidlinie ist. Diese Probleme stören in erheblichem Maße, wo ein kleiner Krümmungsradius praktisch dazu führt, daß das Schneidrad gleichsam um eine zu seiner Achse orthogonale Achse, die senkrecht zur Oberfläche der Glasscheibe steht, geschwenkt werden muß. Hier kann die Rotationsgeschwindigkeit des Schneidrades zu null werden.

Der Erfindung liegt die Aufgabe zugrunde, das eingangs beschriebene Verfahren so zu führen, daß mit höherer Schneidkopfgeschwindigkeit gearbeitet werden kann und stets, auch in bogenförmigen Bereichen der Schnittlinie, ein sauberer Schnitt entsteht. Der Erfindung liegt fernerhin die Aufgabe zugrunde, eine Vorrichtung für die Durchführung des Verfahrens anzugeben.

Zur Lösung dieser Aufgabe lehrt die Erfindung, daß das Schneidrad mit Hilfe eines Schneidradmotors, der in dem Schneidkopf untergebracht ist, angetrieben wird. - Wo das Schneiden einer Glasscheibe gleichsam als Sägevorgang durchgeführt wird, ist es bekannt, mit einer angetriebenen Trennscheibe zu arbeiten, die mit hoher Geschwindigkeit rotiert (SU-A-13 01 794). Das hat die eingangs beschriebenen Probleme beim Schneiden von Glas mit einem Schneidrad nicht beeinflußt. Im Rahmen der Erfindung ist die Rotationsgeschwindigkeit des angetriebenen Schneidrades im allgemeinen nur wenig größer oder auch wenig kleiner, als es der aus der Schneidkopfgeschwindigkeit resultierenden Abwälzgeschwindigkeit im Rahmen der bekannten Maßnahmen entspricht. Abwälzgeschwindigkeit meint dabei die Rotationsgeschwindigkeit des Schneidrades, die sich bei dem beschriebenen Schleppvorgang einstellt. Sie kann im Bereich kleiner Radien der Schneidlinie zu null werden. Die Antriebsgeschwindigkeit des Schneidrades kann größer oder auch kleiner sein, als es aus der genannten Abwälzgeschwindigkeit resultiert. Eine bevorzugte Ausführungsform der Erfindung ist dadurch gekennzeichnet, daß das Schneidrad zumindest längs eines Teilstückes der Schneidlinie mit einer Rotationsgeschwindigkeit angetrieben wird, die größer ist, als es der aus der Schneidkopfgeschwindigkeit resultierenden Abwälzgeschwindigkeit entspricht. Nach bevorzugter Ausführungsform der Erfindung wird das Schneidrad zumindest im bogenförmigen Bereich der Schneidlinie mit der Rotationsgeschwindigkeit angetrieben, die größer ist, als es der aus der Schneidkopfgeschwindigkeit resultierenden Abwälzgeschwindigkeit entspricht. Der Antrieb kann auf verschiedene Weise erfolgen.

Das erfindungsgemäße Verfahren läßt sich besonders einfach dann verwirklichen, wenn das Schneidrad durch Zwischenschaltung einer Überholkupplung von dem Schneidradmotor angetrieben wird und dadurch bei arbeitendem Schneidradmotor in Bereichen hoher Schneidkopfgeschwindigkeit mit der Abwälzgeschwindigkeit als Reibrad geschleppt wird. Durch Einfachheit und Funktionssicherheit ausgezeichnet ist eine Ausführungsform des erfindungsgemäßen Verfahrens, die dadurch gekennzeichnet ist, daß das Schneidrad in geraden Bereichen der Schneidlinie geschleppt und in dem bogenförmigen Bereich der Schneidlinie von dem Schneidradmotor mit der Rotationsgeschwindigkeit angetrieben wird.

Die erreichten Vorteile sind in verfahrensmäßiger Hinsicht darin zu sehen, daß erfingungsgemäß mit höherer Schneidkopfgeschwindigkeit gearbeitet werden kann, als es im Rahmen der bekannten Maßnahmen der Fall ist. Das gilt insbesondere in bogenförmigen Bereichen der Schneidlinie. Darüber hinaus entsteht stets ein sauberer Schnitt. In vorrichtungsmäßiger Hinsicht läßt sich die Erfindung auf einfache Weise verwirklichen.

Eine Vorrichtung für die Durchführung des erfindungsgemäßen Verfahrens arbeitet mit einem nach Maßgabe einer vorgegebenen Schneidlinie steuerbarem Schneidkopf und darin gelagertem Schneidrad. Sie ist dadurch gekennzeichnet, daß das Schneidrad einen Schneidradmotor aufweist und dadurch mit einer von der Abwälzgeschwindigkeit unabhängigen, wenn auch darauf abstimmbaren, Rotationsgeschwindigkeit antreibbar ist. Dabei ist nach bevorzugter Ausführungsform der Erfindung zwischen dem Schneidradantriebsmotor und dem Schneidrad eine Überholkupplung, anders ausgedrückt ein Freilauf angeordnet, der die schon beschriebene Kinematik zuläßt. Bei der erfindungsgemäßen Vorrichtung kann das Schneidrad mit unterschiedlicher Rotationsgeschwindigkeit antreibbar sein. Das kann rechnergesteuert geschehen. Es besteht auch die Möglichkeit, die Vorrichtung so auszubilden, daß das Schneidrad nach Maßgabe der Geometrie der Schneidspur in Abhängigkeit von der Bewegungssteuereinrichtung für die Relativbewegung des Schneidkopfes gegenüber der Glasscheibe antreibbar ist.

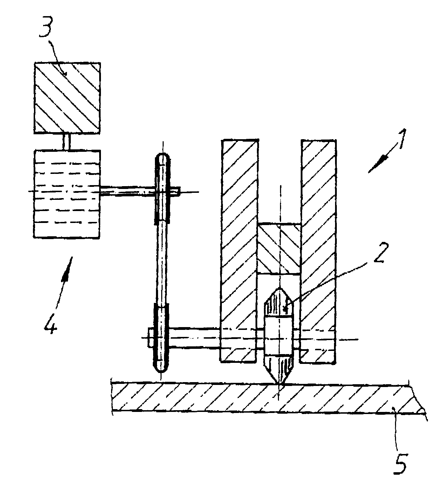

Im folgenden wird eine Vorrichtung für die Durchführung des erfindungsgemäßen Verfahrens anhand einer lediglich ein Ausführungsbeispiel darstellenden Zeichnung ausführlicher erläutert. Die einzige Figure zeigt das Schema einer Vorrichtung für die Durchführung des erfindungsgemäßen Verfahrens in einer Ansicht entgegen der Schneidrichtung.

Die in der Figur dargestellte Vorrichtung zeigt einen nach Maßgabe einer vorgegebenen Schneidlinie steuerbaren Schneidkopf 1 und ein darin gelagertes Schneidrad 2. Das Schneidrad 2 weist einen Schneidradmotor 3 auf und ist dadurch über ein beliebiges Getriebe mit einer von der Abwälzgeschwindigkeit unabhängigen Rotationsgeschwindigkeit antreibbar. Zwischen dem Schneidradmotor 3 und dem Schneidrad 2 befindet sich eine Überholkupplung 4. Das Schneidrad 2 kann mit unterschiedlicher Rotationsgeschwindigkeit antreibbar sein, und zwar auch rechnergesteuert bzw. in Abhängigkeit von der Bewegungssteuereinrichtung für die Relativbewegung zwischen Schneidrad 2 und zu schneidender Glasscheibe 5.

## Patentansprüche

1. Verfahren zum Schneiden einer Glasscheibe (5) mit einem Schneidrad (2), welches mit Hilfe eines Schneidkopfes (1) nach Maßgabe einer vorgegebenen Schneidlinie, die zumindest einen bogenförmigen Bereich aufweist, linear mit der Schneidkopfgeschwindigkeit bewegt wird und dabei um seine Achse rotiert, **dadurch gekennzeichnet,** daß das Schneidrad mit Hilfe eines Schneidradmotors (3), der in dem Schneidkopf untergebracht ist, angetrieben wird.

2. Verfahren nach Anspruch 1, dadurch gekennzeichnet, daß das Schneidrad (2) zumindest längs eines Teilstückes der Schneidlinie mit einer Rotationsgeschwindigkeit angetrieben wird, die größer ist, als es der aus der Schneidkopfgeschwindigkeit resultierenden Abwälzgeschwindigkeit entspricht.

3. Verfahren nach einem der Ansprüche 1 oder 2, dadurch gekennzeichnet, daß das Schneidrad (2) im bogenförmigen Bereich der Schneidlinie mit der Rotationsgeschwindigkeit angetrieben wird, die größer ist, als es der aus der Schneidkopfgeschwindigkeit resultierenden Abwälzgeschwindigkeit entspricht.

4. Verfahren nach einem der Ansprüche 1 bis 3, dadurch gekennzeichnet, daß das Schneidrad (2) unter Zwischenschaltung einer Überholkupplung (4) von dem Schneidradmotor (3) angetrieben wird und dadurch bei arbeitendem Schneidradmotor in Bereichen hoher Schneidkopfgeschwindigkeit mit der Abwälzgeschwindigkeit geschleppt wird.

5. Verfahren nach einem der Ansprüche 1 bis 4, dadurch gekennzeichnet, daß das Schneidrad (2) in geraden Bereichen der Schneidlinie geschleppt und in bogenförmigen Bereichen der Schneidlinie mit der Rotationsgeschwindigkeit angetrieben wird, die größer ist, als es der aus der Schneidkopfgeschwindigkeit resultierenden Abwälzgeschwindigkeit entspricht.

6. Vorrichtung für die Durchführung des Verfahrens nach einem der Ansprüche 1 bis 5 mit nach Maßgabe einer vorgegebenen Schneidlinie arbeitendem Schneidkopf (1) und darin gelagertem Schneidrad (2), dadurch gekennzeichnet, daß das Schneidrad (2) einen Schneidradmotor (3) aufweist und dadurch mit einer von der Abwälzgeschwindigkeit unabhängigen Rotationsgeschwindigkeit antreibbar ist.

7. Vorrichtung nach Anspruch 6, dadurch gekennzeichnet, daß zwischen dem Schneidradantriebsmotor (3) und dem Schneidrad (2) eine Überholkupplung (40) angeordnet ist.

8. Vorrichtung nach einem der Ansprüche 6 oder 7, dadurch gekennzeichnet, daß das Schneidrad (2) mit unterschiedlicher Rotationsgeschwindigkeit antreibbar ist.

9. Vorrichtung nach einem der Ansprüche 6 bis 8, dadurch gekennzeichnet, daß das Schneidrad (2) rechnergesteuert antreibbar ist.

10. Vorrichtung nach einem der Ansprüche 6 bis 9, dadurch gekennzeichnet, daß das Schneidrad (2) nach Maßgabe der Geometrie der Schneidlinie in Abhängigkeit von der Steuereinrichtung für die Relativbewegung des Schneidkopfes (1) gegenüber der Glasscheibe (5) antreibbar ist.

## Claims

1. A method of cutting a glass sheet (5) with a cutting wheel (2) which is moved linearly by means of a cutting head (1) at the cutting head speed in accordance with a predetermined line of cut which has at least one arc-shaped region, the cutting wheel thus rotating about its axis, characterised in that the cutting wheel is driven by a cutting wheel motor (3) which is accommodated in the cutting head.

2. A method according to Claim 1, characterised in that the cutting wheel (2) is driven at least along a portion of the line of cut at a rotational speed which is greater than that corresponding to the speed of rolling contact resulting from the cutting head speed.

3. A method according to either one of Claims 1 or 2, characterised in that the cutting wheel (2) is driven in the arc-shaped region of the line of cut at a rotational speed which is greater than that corresponding to the speed of rolling contact resulting from the cutting head speed.

4. A method according to any one of Claims 1 to 3, characterised in that the cutting wheel (2) is driven by the cutting wheel motor (3) with an overriding clutch (4) interposed therebetween and is thus drawn at the speed of rolling contact in regions of greater cutting head speed when the cutting wheel motor is running.

5. A method according to any one of Claims 1 to 4, characterised in that the cutting wheel (2) is drawn in straight regions of the line of cut and in arc-shaped regions is driven at a rotational speed which is greater than that which corresponds to the speed of rolling contact resulting from the cutting head speed.

6. A device for carrying out the method according to any one of Claims 1 to 5, with a cutting head (1) operating in accordance with a predetermined line of cut and a cutting wheel (2) mounted in the cutting head, characterised in that the cutting wheel (2) has a cutting wheel motor (3) and can thus be driven at a rotational speed which is independent of the speed of rolling contact.

7. A device according to Claim 6, characterised in that an overriding clutch (4) is disposed between the cutting wheel drive motor (3) and the cutting wheel (2).

8. A device according to either one of Claims 6 and 7, characterised in that the cutting wheel (2) can be driven at different rotational speeds.

9. A device according to any one of Claims 6 to 8, characterised in that the cutting wheel (2) can be driven by computer-controlled means.

10. A device according to any one of Claims 6 to 9, characterised in that the cutting wheel (2) can be driven in accordance with the geometry of the line of cut, depending on the control device for the relative movement of the cutting head (1) in relation to the glass sheet (5).

## Revendications

1. Procédé pour découper une plaque de verre (5) comportant un couteau circulaire (2), qui est déplacé linéairement à l'aide d'une tête de coupe (1), à la vitesse de cette dernière, en fonction d'une ligne de coupe prédéterminée, qui possède au moins une partie en forme d'arc, et tourne autour de son axe, caractérisé en ce que le couteau circulaire est entraîné au moyen d'un moteur (3), qui est logé dans la tête de coupe.

2. Procédé selon la revendication 1, caractérisé en ce que le couteau circulaire (2) est entraîné au moins le long d'une partie de la ligne de coupe avec une vitesse de rotation qui est supérieure à ce qui correspond à la vitesse de roulement qui résulte de la vitesse de la tête de coupe.

3. Procédé selon l'une des revendications 1 ou 2, caractérisé en ce que le couteau circulaire (2) est entraîné, dans la partie en forme d'arc de la ligne de coupe, avec une vitesse de rotation qui est supérieure à ce qui correspond à la vitesse de roulement qui résulte de la vitesse de la tête de coupe.

4. Procédé selon l'une des revendications 1 à 3, caractérisé en ce que le couteau circulaire (2) est entraîné par son moteur (3) moyennant le montage intercalé d'un embrayage à roue libre (4) et de ce fait, lorsque le moteur du couteau circulaire fonctionne, est tiré avec la vitesse de roulement, dans des zones où la vitesse de la tête de coupe est élevée.

5. Procédé selon l'une des revendications 1 à 4, caractérisé en ce que le couteau circulaire (2) est tiré dans des parties rectilignes de la ligne de coupe et est entraîné dans des parties en forme d'arc de la ligne de coupe, avec la vitesse de rotation qui est supérieure à ce qui correspond à la vitesse de roulement qui résulte de la vitesse de la tête de coupe.

6. Dispositif pour la mise en oeuvre du procédé suivant l'une des revendications 1 à 5, comportant une tête de coupe (1) travaillant sur la base d'une ligne de coupe prédéterminée, et un couteau circulaire (2) monté dans la tête de coupe, caractérisé en ce que le couteau circulaire (2) possède un moteur (3) et peut, de ce fait, être entraîné avec une vitesse de rotation indépendante de la vitesse de roulement.

7. Dispositif selon la revendication 6, caractérisé en ce qu'un accouplement à roue libre (4) est disposé entre le moteur (3) d'entraînement du couteau circulaire (2) et ce dernier.

8. Dispositif selon l'une des revendications 6 ou 7, caractérisé en ce que le couteau circulaire (2) peut être entraîné avec une vitesse de rotation différente.

9. Dispositif selon l'une des revendications 6 à 8, caractérisé en ce que le couteau circulaire (2) peut être entraîné d'une manière commandée par ordinateur.

10. Dispositif selon l'une des revendications 6 à 9, caractérisé en ce que le couteau circulaire (2) peut être entraîné conformément à la géométrie de la ligne de coupe et en fonction du dispositif de commande pour déplacer la tête de coupe (1) par rapport à la plaque de verre (5).
